(19) Europäisches Patentamt / European Patent Office / Office européen des brevets

(11) **EP 3 727 778 B1**

(12) **EUROPEAN PATENT SPECIFICATION**

(45) Date of publication and mention
of the grant of the patent:
**12.06.2024 Bulletin 2024/24**

(21) Application number: **18822084.2**

(22) Date of filing: **20.12.2018**

(51) International Patent Classification (IPC):
**B29B 17/02** (2006.01)     **C08J 11/04** (2006.01)
**C08L 77/02** (2006.01)     **C08L 83/04** (2006.01)

(52) Cooperative Patent Classification (CPC):
**C08J 11/04; B29B 17/02; B29B 17/0404;**
B29B 2017/0203; B29B 2017/0231;
B29B 2017/0244; C08J 2377/02; C08J 2483/04;
Y02P 20/143; Y02W 30/52; Y02W 30/62

(86) International application number:
**PCT/EP2018/086227**

(87) International publication number:
**WO 2019/122145 (27.06.2019 Gazette 2019/26)**

(54) **METHOD OF SEPARATING MATERIALS FROM AN OBJECT**

VERFAHREN ZUM TRENNEN VON MATERIALIEN VON EINEM OBJEKT

PROCÉDÉ DE SÉPARATION DE MATÉRIAUX À PARTIR D'UN OBJET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **22.12.2017 EP 17306923**

(43) Date of publication of application:
**28.10.2020 Bulletin 2020/44**

(73) Proprietor: **Polytechnyl SAS**
**69006 Lyon (FR)**

(72) Inventors:
• **PLOUCHART, Sébastien**
  **69110 Sainte-Foy-Les-Lyon (FR)**
• **DE SOYRES, Manuel**
  **69006 Lyon (FR)**
• **POKROPSKI, Tomasz**
  **66-400 Gorzow Wielkopolski (PL)**
• **MOLLET, Vincent**
  **69540 Irigny (FR)**

(74) Representative: **Gevers Patents**
**De Kleetlaan 7A**
**1831 Diegem (BE)**

(56) References cited:
**EP-A2- 0 950 684     JP-A- 2001 180 413**
**JP-A- 2009 269 475     US-A1- 2014 042 252**

**Description**

BACKGROUND

Many technical products are composite objects and comprise two or more different materials. For example, technical textiles are often knitted, woven or nonwoven and composed of thermoplastic fibers for specific applications, such as flame retardancy, mechanical strength, electrical and/or thermal conductivity, or the protection of personnel. They are typically surface-treated with a coating, for example applied by coating.

Examples of coated technical textiles include airbags, which are inflatable protective bags used for the protection of the occupants of a vehicle. Such articles generally comprise a bag based on polyamide or on polyester, generally in the form of woven fabrics of fibers, or several layers, and a silicone coating on one of the faces. Airbags are widely manufactured by deposition of a silicone composition which can crosslink to form a thin layer of silicone elastomer.

A problem is the recycling of these technical objects, such as coated airbags, due to the incompatibility of the thermoplastic fibers and the polymers used for the coating, such as silicone. This is because it is very difficult to mechanically dissociate the two materials. Their direct reuse without pretreatment results in a poor performance due to the presence of coating, which also adversely affects the surface appearance of the molded parts and often results in severe fouling of the molds during the injection.

US 2014/0042252 A1 provides a process for treating technical textiles comprising thermoplastic fibers in the coating material, using the principle of centrifugal decanting to separate the fiber residues and the coating material. Further disclosed in US 2014/0042252 A1 is a process for the manufacture of a thermoplastic composition, in particular for molding, obtained by use of the fiber residues as obtained and optionally of reinforcing fillers.

The present invention aims at providing an improved process for recycling technical objects comprising at least two different materials.

The inventors of the present application found that the process disclosed in US 2014/0042252 A1 can be significantly improved if the particles derived from the technical object are incubated for a period of time in an alkaline or acidic solution prior to the centrifugation step. Without wishing to be bound by any theory, it is believed that during this incubation step hydrolysis of the bonds linking the two different materials to each other takes place and, therefore, separation of the two materials is enhanced. In particular, it was surprisingly found that the yield of at least one recovered material is improved by the process of the invention.

SUMMARY OF THE INVENTION

The present invention therefore relates to the subject matter defined in the following claims 1 to 15.

DETAILED DESCRIPTION

The present invention relates to a process for treating an object comprising at least two different materials which are bound to each other. The density of the first material is different from the density of the second material. Preferably, the density of the first material ($\rho A$) and the density of the second material ($\rho B$) are such that they fulfil the following relationship:

$$\frac{2*|\rho A - \rho B|}{(\rho A + \rho B)} > 0.03,$$

wherein $\rho A$ is the density of the first material (A), and $\rho B$ is the density of the second material (B).

More preferably, the density of the first material and the density of the second material are such that they fulfil the following relationship:

$$\frac{2*|\rho A - \rho B|}{(\rho A + \rho B)} > 0.04.$$

The technical object typically comprises two different materials. In other embodiments, the technical object to be treated in accordance with the present invention comprises at least three or at least four different materials. In a preferred embodiment, the technical object to be treated substantially consists of two different materials. In other embodiments the object to be treated substantially consists of three different materials or of four different materials. The technical objects may be fibers, woven or nonwoven fabrics, extruded or blow-molded articles such as films, sheets and multilayer objects.

Typically, the first material of the technical object to be treated is a thermoplastic polymer, more preferably, it is a polyamide such as PA66. The second material can be composed of a single polymer or of a mixture of polymers, and it can be thermoplastic or thermosetting. The first material is preferably mixed with a surface coated or intermingled or co-mingled or interwoven or laminated or coextruded second material. The second material is preferably selected from silicones, polyurethanes, fluorinated polymers, rubbers and the like. More preferably, the second material is a silicone, a polyurethane coating, a polyurethane fiber or a fluorinated polymer.

Typical textile objects to be treated in accordance with this invention are polyamide/silicone airbags, elasticized polyamide/polyurethane textiles, polyamide or polyester/PTFE textile tissues, polyamide cord fibers / rubber compounds from tires etc. Accordingly, in a preferred embodiment the first material is a polyamide, and the second material is a silicone. In another preferred embodiment the first material is a polyamide, and the second material is a polyurethane. In another preferred embodiment the first material is a polyamide, and the second material is polytetrafluoroethylene (PTFE). In another preferred embodiment the first material is a polyester, and the second material is PTFE. In another preferred embodiment the first material is a polyamide cord fiber, and the second material is a rubber. In another preferred embodiment the first material is a thermoplastic polymer, preferably a polyester or a polyamide, and the second material is polyvinylchloride (PVC).

Typical extruded or blow-molded multilayer parts are multilayer films for packaging, multilayer pipes and cables, bottles and reservoirs.

The technical objects can be provided from industrial waste during fabrication of parts such as airbags, elasticized fibers, tissues, clothes, films or end-of-life waste, such as "post-consumer" waste. An example can be the airbag fabric (i.e. polyamide fabric coated with silicone) that generates bi-component textile waste during both an airbag fabrication and after the end of life of a vehicle, by recovery of airbags from the vehicles.

In a first step, the process of the present invention comprises physically treating the object to obtain micronized particles. This step of physical treatment is typically a conversion of a technical object into small pieces. It may include cutting the objects into smaller pieces, e.g. by blade-cutting (e.g. by guillotine-type and/or by rotative blades) followed by disaggregation and pulverization by a micronization process such as mechanical scratching and/or fiber shredding, for example with a rotor/stator plus grid micronizer or a rotor/stator air classifier micronizer, or a cryogenic impact mill, or any other equipment available in the state of the art. The term "micronized" as used herein, refers to particles having a main dimension of less than 10 mm. The shape or aspect ratio of the micronized particles is not limited.

The micronized particles obtained by the physical treatment typically have a main dimension between 15 $\mu$m and 5 mm, preferably from 0.1 mm to 2 mm. The term "main dimension" as used herein, is synonymous to the median diameter (d50 value). The particle size distribution of the objects can be obtained by laser diffraction measurement, in particular on a particle sizer from Malvern, for example by using the wet route module. All the particles are compared to spheres, without taking into account their aspect ratio in this calculation. The d50 mesh is the dimension such that 50% of the particles are smaller than this dimension and 50% of the particles are larger than this dimension. The laser diffraction particle size analysis can be carried out according to the instructions of the standard AFNOR ISO 13320-1. By way of example, the particle size distribution can be measured according to the following protocol: A Malvern Master Sizer 2000 light diffraction particle sizer equipped with the hydro S module is used, after suspending the sample in ethanol. The measurement conditions are as follows: Stirring in the cell of the particle sizer: 1,400 rev/min; optical model: Fraunhofer; measurement range: from 100 nm to 3,000 $\mu$m.

The population of particles obtained in step (i) typically comprises at least three kinds of particles:

a) particles substantially consisting of the first material, for example separated particles of fibers of thermoplastic polymer alone; these particles typically have a main dimension between 15 $\mu$m and 5 mm, preferably from 0.1 mm to 2 mm.

b) particles substantially consisting of the second material, e.g. separated particles of fibers of the second material alone; these particles typically have a main dimension between 15 $\mu$m and 5 mm, preferably from 15 $\mu$m to 2 mm.

c) particles comprising both the first material and the second material, e.g. aggregates containing the two polymers still partially linked together; these particles typically have a main dimension between 15 $\mu$m and 5 mm, preferably from 0.1 mm to 2 mm.

It is not necessary that there is a complete disaggregation of the first material from the second material in the physical treatment step (i).

The method further comprises, as the next step, suspending the micronized particles in an acidic solution or in an alkaline solution, depending on the nature of materials, to at least partially separate the first material from the second material. The acidic or alkaline solution typically is an aqueous solution comprising water and an acid or a base.

If the aqueous solution is an acidic solution, the pH of the aqueous solution is preferably less than 3, more preferably less than 2, or even less than 1.5 or less than 1. If the aqueous solution is an alkaline solution, the pH of the alkaline solution is preferably at least 10, more preferably at least 11, more preferably at least 12, most preferably at least 13. Preferred acids to be used for preparing the acidic solution are hydrochloric acid or sulfuric acid. Preferred compounds for adjusting an alkaline pH in the alkaline solution are sodium hydroxide or potassium hydroxide.

The acidic or alkaline solution may comprise further compounds such as salts, e.g. sodium chloride. After suspension of the micronized particles in the acidic or alkaline solution, the suspended particles are incubated or kept in the acidic or alkaline solution for a sufficient period of time to achieve at least a partial separation of the first material from the second material. In one embodiment, the incubation time is at least 10 minutes. Preferably, the incubation time is at least 30 minutes, or at least 1 hour , or at least 3 hours, or at least 5 hours, or at least 6 hours. Typical incubation periods are in the range from 10 minutes to 12 hours, or 1 hour to 10 hours, or 2 hours to 8 hours, or 3 hours to 6 hours.

The temperature of the aqueous solution and/or of the suspension is preferably in the range from 15°C to 95°C, preferably from 30°C to 70°C.

The process of the chemical treatment, step (ii), can be carried out batch-wise or continuously, e.g. by slurry treatment or solid/liquid contact, by continuous stirred tank reactor, by reactor in cascade, or by tubular reactors.

At the end of step (ii), the residual liquid is removed from the suspension and the solids are preferably recovered from the suspension. The recovered solids typically have a water content of less than 30%, preferably less than 25%, more preferably less than 20%, most preferably less than 15%.

The residual alkaline or acid solution can be reclycled in the system after pH adjustment.

The recovered solids are then suspended in a liquid, preferably in an aqueous solution, having a density which is between the densities of the first material and the second material. This liquid is referred also as "liquid C" or "solution C" hereinafter. Accordingly, the density of the liquid C and the densities of the first material (A) and of the second material (B) follow the following relationship:

$$\rho C \in [\rho A \; ; \; \rho B]$$

Preferably, to obtain better purity of the first material A, the density of the solution at the process temperature have to be in the following range:

$$\text{if } \rho A > \mu B : \qquad (\rho A + \rho B)\,/2 < \rho C < \rho A$$

$$\text{if } \rho A < \rho B : \qquad (\rho A + \rho B)\,/2 > \rho C > \rho A$$

More preferably, to obtain higher purity of the first material A, the density of the solution the process temperature has to be in the following range.

$$\text{if } \rho A > \mu B : \qquad (\rho A \; x \; 0,98) < \rho C < \rho A$$

$$\text{if } \rho A < \rho B : \qquad (\rho A \; x \; 1,02) > \rho C > \rho A$$

E.g. in the case of separation of polyamide and silicone, the liquid C typically has a density in the range from 1 and 1.5, in particular between 1.03 and 1.5, for example between 1 and 1.12, and more particularly between 1.05 and 1.12 g/cm$^3$. In certain embodiments liquid C does not comprise an alcohol; In a specific embodiment liquid C does not comprise a solvent other than water.

Usually the process temperature at this step is in the range from 15°C to 95°C, preferably from 30°C to 70°C.

The liquid C can be composed of water and dissolved salt. This salt can be added to water or can be directly generated in C to form that neutralization of the chemical agent from the previous step by adjusting the pH of the liquid C to a pH in the range between 5 and 10, in order to avoid acid hydrolysis of the materials, e.g. of the polyamide. The pH can be measured from a sample of the liquid C or can be directly measured on the slurry in the presence of first and second material (e.g. fiber A and particle B), in a continuous way.

The liquid density of liquid C is measured at the usage temperature according to any methodology known in the art, e.g. with a densimeter or a continuous Coriolis flow meter. If necessary, an adjustment can be done by addition of salt or acid and base couple. A typical salt concentration is from 5 to 30%, preferably from 8 to 20%.

A slurry made of fibers A and particles B dispersed in solution C is obtained and hence A and B can be separated by density gradient.

The separation by the centrifugal force of the particles essentially consisting of the first material, on the one hand, and of the particles essentially consisting of the second material, on the other hand, can be carried out in various ways by the centrifugal force.

It is preferable to use a technique of centrifugal decanting or centrifuging based on the centrifugal force created by rotating the suspension, in particular at high speed, in a rotating machine, such as a centrifuge, a bowl centrifuge, a bowl screw centrifuge or a plate separator.

It is preferable to use horizontal-axis centrifugal decanters, referred to as HACDs, which make it possible in particular to separate solid particles from the carrier liquid by centrifugal decanting. The suspension enters a cylindroconical bowl in which a screw conveyor is positioned. The liquid forms a liquid ring in the bowl, whereas the solids, by the centrifugal effect, are flattened against the surface of the bowl. The centrate is then discharged by overflowing at the level of the cylindrical part of the machine, whereas the solids deposited on the bowl are conveyed by the screw in the direction of the cylindrical part of the machine, where they are discharged. It is possible to use, for this purpose, a centrifugal decanter such as mentioned in the application WO9740941. Mention may also be made of the centrifuges from Flottweg, such as the Tricanter®, the Sedicanter® and the Sorticanter®.

The suspension to be separated is then introduced into the decanter by an axial feed pipe. The product is gradually accelerated in the dispensing chamber before being introduced into the bowl by appropriate orifices. The bowl, of cylindroconical shape, rotates at an optimized speed. The suspension rotates with the bowl at the operating speed and forms a concentric layer on the internal wall of the bowl. The solid particles present in the suspension are flattened against the wall of the bowl under the effect of the centrifugal field. The diameter, the length of the cylindrical section and the angle of the cone are defined according to the specific requirements of the application. The conveying screw rotates at a different speed from that of the bowl, which allows it to convey the solid particles which have decanted toward the conical end of the bowl. The differential speed determines the retention time of the solid particles in the bowl and consequently the dryness of the solids extracted. It can be adjusted while running, for the purpose of optimizing the separation. The screw pitch and the number of threads form part of the main design variables. The separated solids are discharged at the conical end of the bowl into the sediment collector and then fall by gravity into the discharge hopper.

After the density gradient separation, the separated first material and/or the separated second material may be washed, dried, and shaped in to granules or sinterized particles. Drying may be necessary to remove or reduce the content of water or other liquid of the recovered particles. The drying techniques can be mechanical or thermal. Preference is given in particular to evaporation by hot air. The heat can be transferred by convection, infrared radiation, conduction, microwaves or high frequency.

The salt solution can be recycled after separation from the solid.

## Examples

Airbags based on polyamide 66 coated on face with crosslinked silicone were used in this example. The content of silicone was 10% by weight. The airbags were industrial waste.

## Physical treatment

The air-bags were cut up, ground and micronized:

- first, cut in pieces from 20 to 80cm

- Secondly, cut in small pieces square shaped of 2x2cm by blade cutting

- Thirdly, micronised in short fibers by a microniser with a row of stationary knives and a row of moving knives and a screen

The residual product was composed of

- Separated fibers ofpolyamide with a length between 0.1 to 1.5mm,

- Separated particles of the coating material (silicone) from 15 to 200$\mu$m

- Aggregates of fiber and silicone from 15$\mu$m to 2 mm

The size of these particles was measured by optical microscopy and by laser diffraction measurement. The particles exhibited a median diameter D50 from 108 to 141µm.

## Chemical treatment

The fibers, particles, agglomerate were suspended in a liquid having a density of 1.100, comprising sodium hydroxide and exhibiting a pH of 14.

In the case of examples 1, 2, 3 of the table N°1, the fibers and silicone particles were separated from sodium hydroxide solution by a pusher centrifuge (Solid/Liquid separator).

In the case of the comparative example the separation phase, there was no additional treatment in this phase. The comparative example corresponds to the disclosure in the experimental part of US 2014/0042252 A1.

## Separation Phase

a) In the case of examples 1, 2, 3 of the table N°1, the fibers and silicone particles were then introduced in a solution comprising sodium sulfate, adjusted to the density required e.g. from 1.11 to 1.096 by adjustment of the sodium sulfate concentration at the process temperature from 10 to 11.2% w/w and exhibiting a pH of 9.2 in the examples from table N°1.

b) In the case of the comparative example, the fibers and silicone particles were left in the sodium hydroxide solution having a density of 1.1 and exhibiting a pH of 14.

The suspensions were then fed to a Solid / Solid / Liquid separator, used for the separation of the polyamide particles and the coating particles, by difference of density, with the following parameters:

- Rotational speed of separator: 3000 revolutions/minute

- Temperature: 25 °C

The solid fractions present in the two exiting streams were then measured. The results are mentioned in table 1:

- The solid contents were determined by taking samples from the two exiting streams and drying at 170°C.

- The solid content of each of the outlet streams was defined by weighing difference.

- The yield of silicone washing and the yield of the Polyamide recovery were calculated by carrying out an elemental analysis of the silicon before the treatment on ground residues and after the treatment on the fibers forming the heavy solid phase.

TABLE 1: Starting material 100 kg of airbag micronized (90%wt PA66 and 10% wt silicone). Data are referred to the final products after the whole process.

| | Recovered PA fraction (kg) | Polyamide in heavy phase (%) | Yield of PA recovery from airbags (kg of recovered pure PA/90 kg*100) | Separated Silicone waste fraction (kg) | PA impurity in the separated silicone waste (%) | Yield of silicone washing |
|---|---|---|---|---|---|---|
| EX. 1 | 70.0 | 99.40 | 77.31 | 30.0 | 68.1 | 95.8% |
| EX. 2 | 86.0 | 98.50 | 94.12 | 14.0 | 37.8 | 87.1% |
| EX. 3 | 88.5 | 97.20 | 95.58 | 11.5 | 34.6 | 75.2% |
| COMP. EX. 1 | 67.0 | 99.80 | 74.30 | 33.0 | 70.1 | 98.7% |

It is thus apparent that the process according to the present invention makes possible:

- the removal of the silicone coating from the textile

- the improvement of the yield on the Polyamide recovery from 74.3 to 94.12%

- The direct recovery of polyamide and silicone already neutralized from pH 14 to pH 9.2.

This improvement of the yield of Polyamide recovery from previous patent N°US 2014/0042252 A1 is made possible because there are a split of the chemical treatment and the separation phases allowing to adjust the liquid density before Solid / Solid / Liquid separator. Example 1 shows that even when using a non-optimal liquid density for separation, an acceptable yield of PA recovery can be achieved, which is still better than the yield of comparative example 1, where a more suitable density for separation was used.

The process parameters allowing improving the Polyamide recovery yield are mentioned in table 2.

TABLE 2:

| | Slurry characteristic before S/S/L separation | | | | S/S/L separation parameters | | PA in heavy phase (%) | Yield of PA recovery (%) |
|---|---|---|---|---|---|---|---|---|
| | pH | liquid density | Salt concentration | Salt species | speed bowl separator SSL | T°C | | |
| EX1 | 9,2 | 1.110 | 11.50% | $Na_2SO_4$ | 3000 | 25 | 99.4 | 77.3% |
| EX2 | 9,2 | 1.096 | 10.00% | $Na_2SO_4$ | 3000 | 25 | 98.5 | 94.1% |
| EX3 | 9,2 | 1.082 | 9.20% | $Na_2SO_4$ | 3000 | 25 | 97.2 | 95.6% |

(continued)

| | Slurry characteristic before S/S/L separation | | | | S/S/L separation parameters | | PA in heavy phase (%) | Yield of PA recovery (%) |
|---|---|---|---|---|---|---|---|---|
| | pH | liquid density | Salt concentration | Salt species | speed bowl separator SSL | T°C | | |
| COMP. EX. 1 | 14 | 1.100 | 11.20% | NaOH | 3000 | 25 | 99.8 | 74.3% |

**Finishing Phase**

In the case of example 1, 2, 3

The fibrous particles were subsequently rinsed with water, to regain a neutral pH (in the case of the comparative example) and to remove residual salt (in all cases).

Then, the fibrous particles were subsequently dried in a tunnel dryer with hot air, in order to reduce the moisture content to below 0.4%.

**Claims**

1. A process for treating an object comprising a first material which is a thermoplastic polymer and a second material selected from the group consisting of silicones, polyurethanes, fluorinated polymers, rubbers and polyvinylchloride bound to the first material, wherein the density of the first material is different from the density of the second material, said process comprising the following steps:

   (i) physically treating the object to obtain micronized particles,
   (ii) suspending the micronized particles in an acidic or alkaline solution to at least partially separate the first material from the second material,
   (iii) recovering the solids from the suspension obtained in step (ii) and suspending the recovered solids in a liquid composed of water and dissolved salt and having a density which is between the density of the first material and the density of the second material, and
   (iv) Separating the first material from the second material by applying a centrifugal force to the suspension obtained in step (iii).

2. The process of claim 1, wherein the density of the first material ($\rho A$) and the density of the second material ($\rho B$) are such that they fulfil the following condition:

$$\frac{2.|\rho A - \rho B|}{(\rho A + \rho B)} > 0.03$$

3. The process of any one of the preceding claims, wherein the object comprises at least two layers.

4. The process of any one of the preceding claims, wherein the first material is a polyamide.

5. The process of any one of the preceding claims, wherein the second material is a material selected from the group consisting of silicones, polyurethanes and fluorinated polymers.

6. The process of any one of the preceding claims, wherein step (i) further comprises cutting the object into pieces and then micronizing the pieces.

7. The process of any one of the preceding claims, wherein the micronized particles obtained in step (i) have a particle size distribution **characterized by** a d50 value, determined as disclosed in the description, in the range from 15 microns to 5 mm.

**8.** The process of any one of the preceding claims, wherein the micronized particles obtained in step (i) include particles substantially consisting of the first material, particles substantially consisting of the second material, and particles comprising the first material and the second material.

**9.** The process of any one of the preceding claims, wherein the suspended particles are kept in the acidic or alkaline solution for at least 30 minutes.

**10.** The process of any one of the preceding claims, wherein the alkaline solution has a pH of at least 12.

**11.** The process of any one of claims 1 to 9, wherein the alkaline solution has a pH of less than 3, preferably less than 2.

**12.** The process of any one of the preceding claims, wherein the second material is a silicone, and step (ii) comprises suspending the micronized particles in a solution having a pH of at least 12.

**13.** The process of any one of the preceding claims, wherein the suspension obtained in step (iii) and subjected to step (iv) has a pH in the range from 3 to 11, preferably from 4 to 10.

**14.** The process of any one of the preceding claims, wherein step (iii) further comprises neutralizing the recovered solids and/or the suspension obtained in step (iii) prior to step (iv).

**15.** The process of any one of the preceding claims, wherein the separated first material and/or the separated second material obtained from step (iv) is/are washed, dried and optionally shaped into granules or sinterized particles.

**Patentansprüche**

**1.** Ein Verfahren zur Behandlung eines Gegenstands, welcher ein erstes Material, das ein thermoplastisches Polymer ist, und ein zweites Material umfasst, ausgewählt aus der Gruppe bestehend aus Silikonen, Polyurethanen, fluorierten Polymeren, Gummis und Polyvinylchlorid, gebunden an das erste Material, wobei die Dichte des ersten Materials anders ist als die Dichte des zweiten Materials, wobei das Verfahren die folgenden Schritte umfasst:

(i) physikalisches Behandeln des Gegenstands, um mikronisierte Partikel zu erhalten,
(ii) Suspendieren der mikronisierten Partikel in einer sauren oder alkalischen Lösung, um das erste Material zumindest teilweise vom zweiten Material zu trennen,
(iii) Zurückgewinnen der Feststoffe aus der in Schritt (ii) erhaltenen Suspension und Suspendieren der zurückgewonnenen Feststoffe in einer Flüssigkeit zusammengesetzt aus Wasser und gelöstem Salz, welche eine Dichte hat, die zwischen der Dichte des ersten Materials und der Dichte des zweiten Materials liegt, und
(iv) Trennen des ersten Materials vom zweiten Material durch Anwenden einer Zentrifugalkraft auf die in Schritt (iii) erhaltene Suspension.

**2.** Das Verfahren nach Anspruch 1, wobei die Dichte des ersten Materials ($\rho A$) und die Dichte des zweiten Materials ($\rho B$) derart sind, dass sie die folgende Bedingung erfüllen:

$$\frac{2 \cdot |\rho A - \rho B|}{(\rho A + \rho B)} > 0.03$$

**3.** Das Verfahren nach irgendeinem der vorigen Ansprüche, wobei der Gegenstand mindestens zwei Lagen umfasst.

**4.** Das Verfahren nach irgendeinem der vorigen Ansprüche, wobei das erste Material ein Polyamid ist.

**5.** Das Verfahren nach irgendeinem der vorigen Ansprüche, wobei das zweite Material ein Material ist, ausgewählt aus der Gruppe bestehend aus Silikonen, Polyurethanen und fluorierten Polymeren.

**6.** Das Verfahren nach irgendeinem der vorigen Ansprüche, wobei Schritt (i) ferner das Schneiden des Gegenstands in Stücke und anschließend das Mikronisieren der Stücke umfasst.

**7.** Das Verfahren nach irgendeinem der vorigen Ansprüche, wobei die in Schritt (i) erhaltenen mikronisierten Partikel eine Korngrößenverteilung haben, **gekennzeichnet durch** einen d50-Wert, bestimmt wie dargestellt in der Beschreibung, im Bereich von 15 Mikron bis 5 mm.

**8.** Das Verfahren nach irgendeinem der vorigen Ansprüche, wobei die in Schritt (i) erhaltenen mikronisierten Partikel Partikel einschließen, die im Wesentlichen aus dem ersten Material bestehen, Partikel, die im Wesentlichen aus dem zweiten Material bestehen, und Partikel, die das erste Material und das zweite Material umfassen.

**9.** Das Verfahren nach irgendeinem der vorigen Ansprüche, wobei die suspendierten Partikel mindestens 30 Minuten lang in der sauren oder alkalischen Lösung belassen werden.

**10.** Das Verfahren nach irgendeinem der vorigen Ansprüche, wobei die alkalische Lösung einen pH-Wert von mindestens 12 hat.

**11.** Das Verfahren nach irgendeinem der Ansprüche 1 bis 9, wobei die saure Lösung einen pH-Wert von weniger als 3, bevorzugt weniger als 2 hat.

**12.** Das Verfahren nach irgendeinem der vorigen Ansprüche, wobei das zweite Material ein Silikon ist, und Schritt (ii) das Suspendieren der mikronisierten Partikel in einer Lösung mit einem pH-Wert von mindestens 12 umfasst.

**13.** Das Verfahren nach irgendeinem der vorigen Ansprüche, wobei die in Schritt (iii) erhaltene und Schritt (iv) unterzogene Suspension einen pH-Wert im Bereich von 3 bis 11 hat, bevorzugt von 4 bis 10.

**14.** Das Verfahren nach irgendeinem der vorigen Ansprüche, wobei Schritt (iii) ferner das Neutralisieren der zurückgewonnenen Feststoffe und/oder der in Schritt (iii) erhaltenen Suspension vor Schritt (iv) umfasst.

**15.** Das Verfahren nach irgendeinem der vorigen Ansprüche, wobei das getrennte erste Material und/oder das getrennte zweite Material, erhalten aus Schritt (iv), gewaschen, getrocknet und optional in Granulat oder gesinterte Partikel geformt wird/werden.

## Revendications

**1.** Procédé de traitement d'un objet comprenant un premier matériau qui est un polymère thermoplastique et un second matériau choisi dans le groupe constitué des silicones, les polyuréthanes, les polymères fluorés, les caoutchoucs et le polychlorure de vinyle lié au premier matériau, dans lequel la densité du premier matériau est différente de la densité du second matériau, ledit procédé comprenant les étapes consistant à :

(i) traiter physiquement l'objet pour obtenir des particules micronisées,
(ii) suspendre les particules micronisées dans une solution acide ou alcaline pour séparer au moins partiellement le premier matériau du second matériau,
(iii) récupérer les solides de la suspension obtenue à l'étape (ii) et suspendre les solides récupérés dans un liquide composé d'eau et de sel dissous et dont la densité est comprise entre la densité du premier matériau et la densité du second matériau, et
(iv) séparer le premier matériau du second matériau en appliquant une force centrifuge à la suspension obtenue à l'étape (iii).

**2.** Procédé de la revendication 1, dans lequel la densité du premier matériau ($\rho A$) et la densité du second matériau ($\rho B$) sont telles qu'elles remplissent la condition suivante :

$$\frac{2 \cdot |\rho A - \rho B|}{(\rho A + \rho B)} > 0.03$$

**3.** Procédé de l'une quelconque des revendications précédentes, dans lequel l'objet comprend au moins deux couches.

**4.** Procédé de l'une quelconque des revendications précédentes, dans lequel le premier matériau est un polyamide.

**5.** Procédé de l'une quelconque des revendications précédentes, dans lequel le second matériau est un matériau choisi dans le groupe constitué des silicones, des polyuréthanes et des polymères fluorés.

**6.** Procédé de l'une quelconque des revendications précédentes, dans lequel l'étape (i) consiste en outre à couper l'objet en pièces, puis à microniser les pièces.

**7.** Procédé de l'une quelconque des revendications précédentes, dans lequel les particules micronisées obtenues à l'étape (i) ont une distribution de taille de particules **caractérisée par** une valeur d50, déterminée comme indiqué dans la description, comprise entre 15 microns et 5 mm.

**8.** Procédé de l'une quelconque des revendications précédentes, dans lequel les particules micronisées obtenues à l'étape (i) incluent des particules constituées essentiellement du premier matériau, des particules constituées essentiellement du second matériau, et des particules comprenant le premier matériau et le second matériau.

**9.** Procédé de l'une quelconque des revendications précédentes, dans lequel les particules suspendues sont maintenues dans la solution acide ou alcaline pendant au moins 30 minutes.

**10.** Procédé de l'une quelconque des revendications précédentes, dans lequel la solution alcaline a un pH d'au moins 12.

**11.** Procédé de l'une quelconque des revendications 1 à 9, dans lequel la solution acide a un pH inférieur à 3, de préférence inférieur à 2.

**12.** Procédé de l'une quelconque des revendications précédentes, dans lequel le second matériau est un silicone, et l'étape (ii) consiste à suspendre les particules micronisées dans une solution ayant un pH d'au moins 12.

**13.** Procédé de l'une quelconque des revendications précédentes, dans lequel la suspension obtenue à l'étape (iii) et soumise à l'étape (iv) a un pH compris entre 3 et 11, de préférence entre 4 et 10.

**14.** Procédé de l'une quelconque des revendications précédentes, dans lequel l'étape (iii) consiste en outre à neutraliser les solides récupérés et/ou la suspension obtenue à l'étape (iii) avant l'étape (iv).

**15.** Procédé de l'une quelconque des revendications précédentes, dans lequel le premier matériau séparé et/ou le second matériau séparé obtenu à l'étape (iv) est/sont lavé(s), séché(s) et éventuellement façonné(s) en granules ou en particules frittées.

## REFERENCES CITED IN THE DESCRIPTION

**Patent documents cited in the description**

- US 20140042252 A1
- WO 9740941 A